# EUROPEAN PATENT SPECIFICATION

(11) **EP 2 250 071 B1**
(45) Date of publication and mention of the grant of the patent: **25.05.2011**
(21) Application number: 09707762.2
(22) Date of filing: 03.02.2009
(51) Int. Cl.: B62D 49/06

(54) **TRACTOR COUNTERWEIGHT**
TRAKTORGEGENGEWICHT
CONTREPOIDS POUR TRACTEUR

(30) Priority: 06.02.2008 GB 0802165; 04.03.2008 GB 0803999
(43) Date of publication of application: 17.11.2010
(73) Proprietor: Agco SA, 60026 Beauvais (FR)
(72) Inventor: PRADEAU, Adrien, F-60000 Beauvais (FR); GAUTHIER, Sébastien, F-60000 Beauvais (FR)
(74) Representative: Morrall, Roger
(86) International application number: PCT/EP2009/000680
(87) International publication number: WO 2009/098018

(56) References cited:
- EP-A- 0 357 972
- EP-A- 0 756 988
- WO-A-00/51613
- US-A1- 2007 261 866

## Description

The invention relates to a counterweight for attachment to the front or rear of a tractor.

The continuing trend for agricultural machinery to grow in size goes hand-in-hand with the increasing size and power of tractors. Technical advances have allowed the power of tractors to increase without a proportionate increase in overall weight. In some applications this is advantageous, for example where soil compression is to be avoided. However, in order to transmit the power of the tractor to the ground without excessive wheel slippage, it is known to provide counterweights on either the front or the rear of the tractor depending on the application.

US-2007/0261866, which shows the preamble of claim 1, discloses a single-piece tractor weight which can be attached to the three-point linkage of the tractor by means of transverse pins and a top-link hitching point. The weight can be attached to the front or the rear of the tractor.

In accordance with a first aspect of the present invention there is provided a counterweight for attachment to a tractor, comprising a body, and first attachment means and a first recess disposed on a first vertical face of the body, the first attachment means comprising two arm-hitching points to engage with respective linkage arms on a tractor, and a top-link hitching point to receive a top link connected to said tractor, the first recess serving to receive a drawbar of an attached implement, wherein the counterweight further comprises second attachment means and a second recess disposed on a second opposing vertical face of the body, the second attachment means having a hook-shaped member for engagement with a lip on the forward end of a tractor, the second recess serving to receive a drawbar of an attached implement.

A counterweight having both three-point linkage attachment means and a hook-shaped member is extremely flexible in that the counterweight can be simply mounted on the front or rear three-point linkage of a second tractor which can then transfer the assembly onto the front lip of the receiving tractor by simple lifting and lowering of the linkage. This allows the user to simply attach and detach the weight when required using limited resources. Advantageously, the invention allows a drawbar-mounted implement, such as a trainer, to be simply attached to the counterweight, whether the latter is mounted on the front of the tractor by either attachment means.

Preferably, the top-link hitching point is provided on a post which is removably secured to the respective vertical face of the body.

Further advantages will become apparent from the following description of the invention, by way of example only, with reference to the accompanying drawings in which:
Figure 1 is a perspective, partially exploded, front view of a tractor counterweight assembly according to one embodiment of the invention;
Figure 2 is a perspective rear view of the tractor counterweight assembly of Figure 1;
Figure 3 is a perspective, partially exploded, rear view of a tractor counterweight assembly according to a secund embodiment of the invention; and,
Figure 4 is a perspective, exploded rear view of the tractor counterweight assembly of Figure 3.

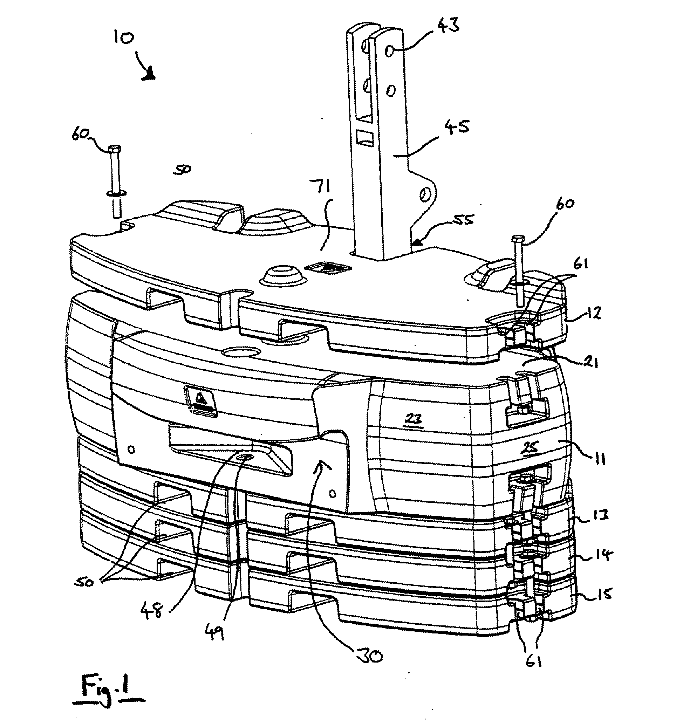

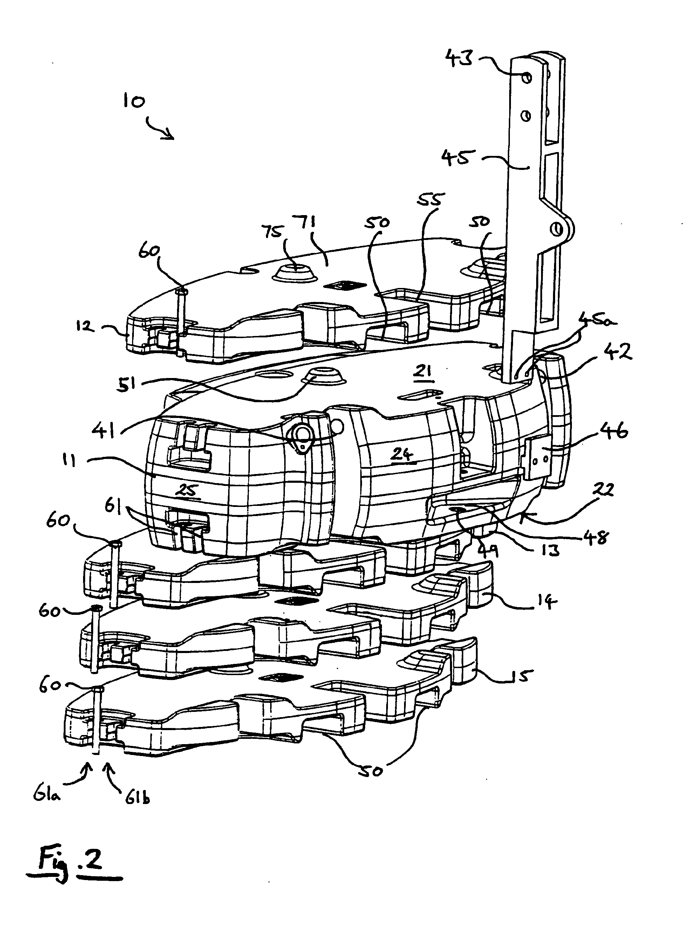

Referring to the Figures 1 and 2. a counterweight assembly 10 comprises a first weight block 11, a second weight block 12, and third, fourth and fifth weight blocks referenced at 13. 14 and 15 respectively. The first weight block 11 has an upper face 21, a lower face 22, a front face 23, a rear face 24, and two side faces 25.

The first weight block 11 further comprises first and second attachment means disposed on the front and the rear face respectively.

On the front face 23 there is disposed a hook-shaped member 30 for engagement with a lip on the forward end of a tractor (not shown), the member 30 being mounded as an integral part of the first weight block 11. By means of simply lowering the assembly 10 onto the forward end of the tractor, the hook-shaped member 30 can hook over the lip, provided on most tractor models. The significant weight of the assembly 10 serves to hold the hook-shaped member 30 in position on the tractor. However, if desired, further locking means can be provided to lock to the front of the tractor.

On the rear face 24 there is provided means for attachment of three-point linkage, typically provided at the rear of tractors and also often provided at the front. This includes two arm-hitching points 41, 42 and a top-link hitching point 43. The arm-hitching points 41, 42 each comprise holes in the first weight block for receiving a transverse pin (not shown) which engages with respective linkage arms provided on the rear or front of a tractor. The top-link hitching point 43 is provided on a post 45 which is removably secured to the rear face 24 of the first weight block 11 by means of two bolts inserted through a securing plate 46 and corresponding holes 45a provided in the post 45. Simple tightening of the bolts (not shown) clamps the securing plate 46 against the post 45, thereby holding it in position.

The assembly 10 can be mounted to the front of a tractor using either the hook-shaped member 30 hooked over the front lip, or using the three-point linkage 41, 42, 43. Furthermore, the assembly can be mounted to the rear of the tractor also using the three-point linkage 41, 42, 43.

This arrangement is particularly advantageous in the case where the user does not have access to a front loader which is a common conventional means used to lift and lower weight blocks onto the front lip of a tractor. The invention allows the assembly 10 to be simply mounted on the front or rear three-point linkage of a second tractor which can then transfer the assembly onto the front lip of the receiving tractor by simple lifting and lowering of the linkage. This significantly increases the flexibility in the use of the weight assembly 10 allowing the user to simply attach and detach the weight when required using limited resources.

The post 45 can be easily removed from the assembly 10 when not required. This permits better forward visibility when the assembly 10 is mounted on the lip at the forward end of the tractor for example.

The first weight block 11 is provided with drawbar receiving means in the form of a recess 48 on both the front and rear faces 23, 24. Therefore, when the assembly is mounted to a tractor by either attachment means, an implement can be attached to the assembly using a drawbar pin inserted through holes 49 provided in the recess. Examples of such implements include harrows and trailers.

The weight blocks 11, 12, 13, 14, 15 are stacked in a vertical direction wherein, in this arrangement, the second weight block 12 is disposed on top of the first weight block 11, and the third, fourth and fifth weight blocks 13, 14, 15 are disposed underneath. Each weight block is provided with a pair of horizontally extending parallel slots 50 for receiving fork prongs of a fork-lift truck or front loader for example.

The second weight block 12 (and further weight blocks) can he added to the first weight block by simply lifting the weight blocks into place using a front-loader for example using the slots 50 provided.

The upper face 21 of the first weight block 11 serves to cooperate with the lower face of the second weight block 12, and comprises a raised projection 51 formed in the surface of the upper face 21. The projection 31 engages with a cooperating receiving indent (not shown) disposed on the lower face of the second weight block 12 and restricts horizontal movement between the first and second weight blocks 11, 12. This aids alignment of the second weight block 12 with the first weight block 11 when being attached. It will be appreciated that the projection and associated indent can take the form of any shape, size or number whilst still providing the same benefit. Moreover, the projections and indents can be provided on the opposite and adjacent surfaces.

The upright post 45 is inside the outline of the first weight block 11 provided by the rear face 24. The second weight block 12 (and each additional weight block) includes a receiving slot 55 which aligns with the post 45. This advantageously provides a means of horizontal alignment when the second weight 12 is being lowered into place using a front-loader for example.

Bolts 60 are inserted, and secured with nuts, in vertically aligned cut-outs 61 extending through the first weight block 11 and the second weight block 12 to lock them in position relative to one another.

Both the upper and lower faces all weight blocks 11, 12, 13, 14, 15 serve to cooperate with adjacent weight blocks. For example, the upper face 71 of the second weight block 12 comprises a raised projection 75 which can cooperate with the lower face of a further weight block should one be so added.

The third weight block 13 is attached to the lower side of the first weight block 11. This can be done by the user simply lifting the third weight block into place, using a front loader for example, and inserting bolts 60 through the aligned cut-outs 61 provided. Subsequently, the fourth and fifth weight blocks 14, 15 can be mounted in the same way.

The horizontally extending and vertically aligned cut-outs 61 are arranged in two columns. Alternate columns are used to hold the respective bolt 60 in place for adjacent cooperating surfaces. For example, the third weight block 13 is secured to the first weight block 11 by a bolt inserted in the first column of cut-outs 61a. However, the fourth weight block 14 is secured to the third weight block 13 by a bolt inserted in the second column of cut-outs 61b.

The arrangement of two columns of cut-outs 61 as shown in the figures has two advantages in particular. Firstly, the cut-out 61 allows the respective bolts 60 to be slid in sideways which is a quick and easy route to locating the bolt. Secondly, the alternate use of the respective columns allows the simple addition and removal of individual additional weight blocks 13, 14, 15...etc, without having to interfere with the locking means of the other weight blocks already attached.

Despite the advantages of the horizontally extending cut-outs, it will be appreciated that vertical holes could instead be employed wherein the bolt heads and retaining nuts may be recessed into the sidewall of the weight block assembly.

The arrangement shown in Figures 1 and 2 therefore comprises a first weight block 11 1 having a second weight block 12 atop, and three weight blocks 13, 14, 15 mounted underneath. By incorporating the flexibility to add any number of further weight blocks either on top or underneath the main weight block 11, the assembly can be easily tailored to the users requirements.

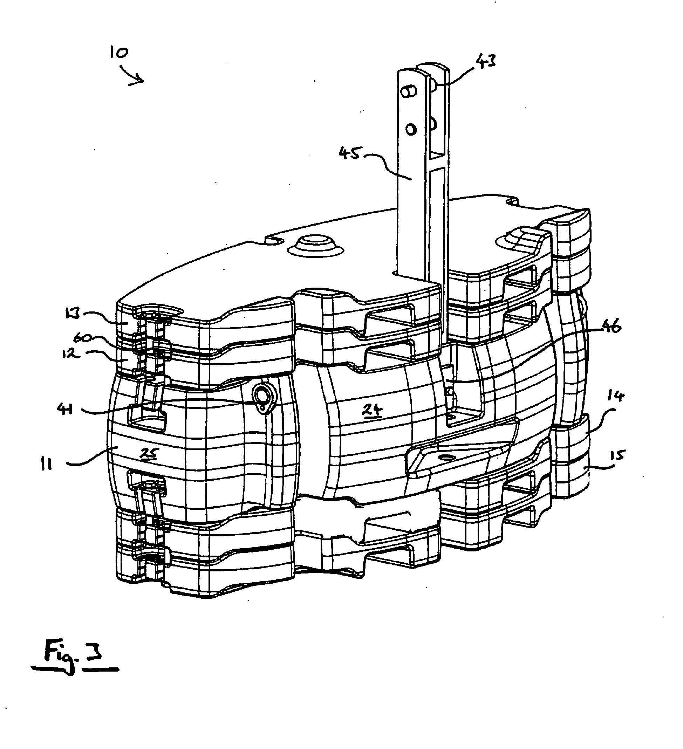

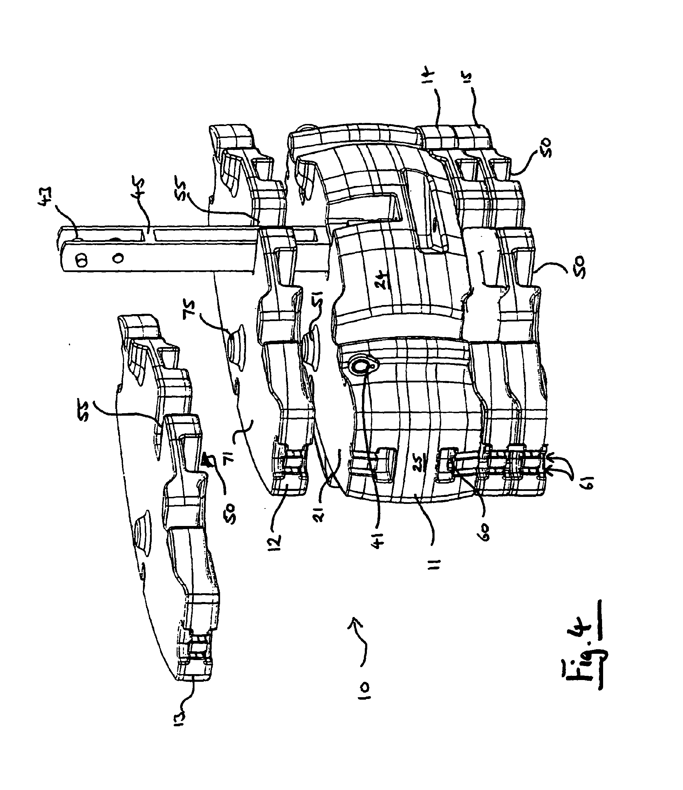

For example, as shown in Figures 3 and 4, the assembly 10 can be arranged to have the second and third weight blocks 12, 13 stacked on top of the first weight block, whereas only the fourth and fifth weight blocks 14, 15 are fixably mounted to the lower face 22.

## Claims

1. A counterweight (10) for attachment to a tractor, comprising a body (11), and first attachment means and a first recess disposed on a first vertical face (24) of the body (11), the first attachment means comprising two arm-hitching points (41,42) to engage with respective linkage arms on a tractor, and a top-link hitching point (43) to receive a top link connected to said tractor, the first recess serving t receive a drawbar of an attached implement, **characterised in that** the counterweight (10) further comprises second attachment means and a second recess disposed on a second opposing vertical face (23) of the body (11), the second attachment means having a hook-shaped member (30) for engagement with a lip on the forward end of a tractor, the second recess serving to receive a drawbar of an attached implement.

2. A counterweight according to Claim 1, wherein the top-link hitching point (43) is provided on a post (45) which is removably secured to the respective vertical face (24) of the body (11).

3. A counterweight according to any preceding claim, further comprising a plurality of horizontally extending parallel slot (50) for receiving fork prongs of a fork-lift truck.

## Patentansprüche

1. An einem Zugfahrzeug, insbesondere landwirtschaftlichem Zugfahrzeug oder Traktor, zu befestigendes Gegengewicht (10) mit einem Körper (11) und mindestens einem ersten Befestigungsorgan und einer ersten Ausnehmung, die an oder in einer ersten vertikalen Fläche, Anlagefläche oder Stirnseite (24) des Körpers (11) angeordnet ist, wobei das mindestens eine erste Befestigungsorgan zwei Arm-Anbau-Punkte (41, 42) zum Eingreifen oder In-Wechselwirkung-Treten in oder mit zugeordneten Verbindungs-Armen des Traktors besitzt, und einem oberen Anbau-Punkt (43) für eine Verbindung zur Aufnahme eines oberen Verbindungselements, das mit dem Zugfahrzeug verbunden ist, wobei die erste Ausnehmung der Aufnahme einer Deichsel oder Kuppelstange eines befestigten Hilfsgeräts, Werkzeugs oder Arbeitsgeräts dient, **dadurch gekennzeichnet, dass** das Gegengewicht (10) mindestens ein zweites Befestigungsorgan aufweist und eine zweite Ausnehmung besitzt, die auf oder an einer zweiten gegenüberliegenden vertikalen Fläche, Anlagefläche oder Stirnseite (23) des Körpers (11) angeordnet ist, wobei das mindestens eine zweite Befestigungsorgan ein hakenförmiges Element (30) besitzt zur Wechselwirkung mit oder zum Eingreifen in eine(r) Lippe an dem vorderen Ende eines Zugfahrzeugs, wobei die zweite Ausnehmung der Aufnahme einer Deichsel oder Koppelstange eines befestigten Hilfsgerät, Werkzeugs oder Arbeitsgeräts dient.

2. Gegengewicht nach Anspruch 1, **dadurch gekennzeichnet, dass** der Anbaupunkt (43) für das obere Verbindungselemnt mit einem Pfosten oder einer Stange (45) ausgebildet ist, der oder die lösbar an der zugeordneten vertikalen Fläche, Stirnfläche oder Anlagefläche (24) des Körpers (11) befestigt oder gesichert ist.

3. Gegengewicht nach einem der vorhergehenden Ansprüche mit mehreren sich horizontal erstreckenden parallelen Schlitzen (50) zur Aufnahme von Gabelzinken eines Gabelstaplers.

## Revendications

1. Contrepoids (10) à coupler à un tracteur, comprenant un corps (11), et des premiers moyens de fixation et une première cavité disposés sur une première face verticale (24) du corps (11), les premiers moyens de fixation comprenant deux points d'accrochage de bras (41, 42) destinés à assurer le couplage de bras de liaison respectifs sur un tracteur, et un point d'accrochage de biellette supérieure (43) destiné à recevoir une biellette supérieure reliée audit tracteur, la première cavité servant à recevoir une barre de traction d'un outil couplé,
**caractérisé en ce que** le contrepoids (10) comprend, en outre, des deuxièmes moyens de fixation et une deuxième cavité disposés sur une deuxième face verticale opposée (23) du corps (11), les deuxièmes moyens de fixation comportant un élément en forme de crochet (30) afin d'assurer le couplage avec un rebord sur l'extrémité avant d'un tracteur, la deuxième cavité servant à recevoir une barre de traction d'un outil couplé.

2. Contrepoids selon la revendication 1, dans lequel le point d'accrochage de biellette supérieure (43) est agencé sur un montant (45) qui est fixé de manière amovible sur la face verticale respective (24) du corps (11).

3. Contrepoids selon l'une quelconque des revendications précédentes, comprenant, en outre, une pluralité de fentes parallèles (50) s'étendant horizontalement afin de recevoir des dents de fourche d'un chariot élévateur.
